# EUROPÄISCHE PATENTSCHRIFT

(11) **EP 1 929 573 B1**
(45) Veröffentlichungstag und Bekanntmachung des Hinweises auf die Patenterteilung: **21.12.2022**
(21) Anmeldenummer: 06805302.4
(22) Anmeldetag: 14.09.2006
(51) Int. Cl.: B01D 71/02

(54) **ELEKTROLYT**
ELECTROLYTE
ELCTROLYTE

(30) Priorität: 14.09.2005 DE 102005044042
(43) Veröffentlichungstag der Anmeldung: 11.06.2008
(73) Patentinhaber: Häring, Thomas, 70619 Stuttgart (DE); Häring, Davina, 70619 Stuttgart (DE); Häring, Rima, 70619 Stuttgart (DE)
(72) Erfinder: Häring, Thomas, 70619 Stuttgart (DE); Häring, Davina, 70619 Stuttgart (DE); Häring, Rima, 70619 Stuttgart (DE)
(86) Internationale Anmeldenummer: PCT/DE2006/001646
(87) Internationale Veröffentlichungsnummer: WO 2007/031076

(56) Entgegenhaltungen:
- EP-A- 1 648 047
- WO-A-03/092090
- WO-A-2005/063851
- WO-A-2005/063862
- WO-A-2007/031076
- JP-A- 2003 327 826
- US-A1- 2006 257 705

## Beschreibung

### Stand der Technik:

Membranen aus Polybenzimidazol (PBI), die Phosphorsäure (PA) enthalten werden als Elektrolyt für Polymerelektrolytmembran-brennstoffzellen (PEM) verwendet. Dabei ist die PA in der PBI-Membran immobilisiert.

Ausführlich beschrieben ist dies In der WO-2005/063851 und WO-2005/063862 Hier werden zusätzlich zur Phosphorsäure bzw. Polyphosphorsäure eine Vielzahl von Additiven, insbesondere anorganische und persulfonierte Additive eingesetzt.

Ebenso werden Im Stand der Technik Membranen aus Polymergemischen verwendet die Polybenzimidazol enthalten. Beschrieben ist dies z.B. In EP-A-1648047.

WO-A-03/092090 beschreibt eine PBI-Phosphorsäure-Membran, die zusätzlich mit einer Sperrschicht aus sulfoniertem Polyethersulfon (sPES) versehen wurde. JP2003-327826 gehört auch zum Stand der Technik.
**Die nachfolgende Erfindung betrifft die Bereitstellung eines Elektrolyten für diese und andere Anwendungen.** Die Erfindung ist in den Ansprüchen festgestellt.

### Beschreibung:

Es wurde folgender vollkommen überraschender und neuer Effekt gefunden, Amino Tris(methylene phosphonsäure) (ATMP) ist eine niedermolekulare AminoPhosphonsäure. Eine Membran **die Polybenzimidazol (PBI)**, ATMP und PA enthält hat eine grössere Leitfähigkeit für Protonen verglichen mit einer PBI-Membran, die nur PA enthält oder einer PBI-Membran, die nur ATMP enthält, Letzteres gilt insbesondere für Temperaturen über 13O°C.

Immobilisiert man ATMP in einer PBI-Membran (Beispiel 1), so stellt man fest, dass diese Membran über 130[deg.]C keine oder nur eine sehr geringe Protonenleitfähigkeit besitzt. Im vergleich dazu hat eine PBI-Membran mit PA (Beispiel 2) **nach dem Stand der Technik** bei gleicher Temperatur eine deutlich grössere Protonenleitfähigkeit.

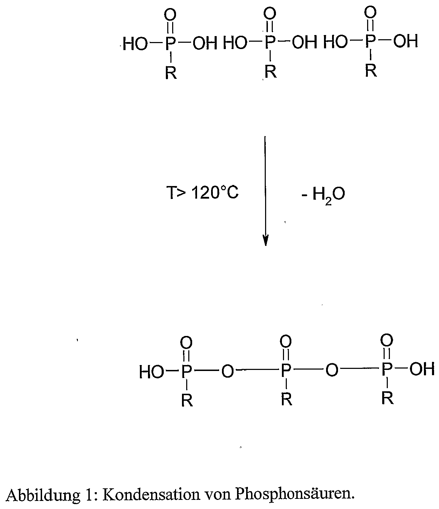

Dies war zu erwarten da ATMP bei Temperaturen über 13O<0>C kondensiert und Wasser abspaltet (Abbildung 1). Durch die Wasserabspaltung verlieren die Phosphonsäuren ihre Funktion als Säure und können nicht mehr als Elektrolyt verwendet werden. Eine PBI-Membran hergestellt nach Beispiel 4 enthält sowohl ATMP als auch PA. Diese Membran besitzt eine höhere Protonen-Leitfähigkeit als die Membranen aus Beispiel 1 und 2. Dies ist völlig überraschend und war nicht zu erwarten. Besonders überraschend dabei ist die höhere Protonenleitfähigkeit für Temperaturen über 120<0>C. Im Temperaturbereich bis 200<0>C ist die Protonenleitfahigkeit deutlich über Vergleichmembranen, die nur PBI und PA enthalten.

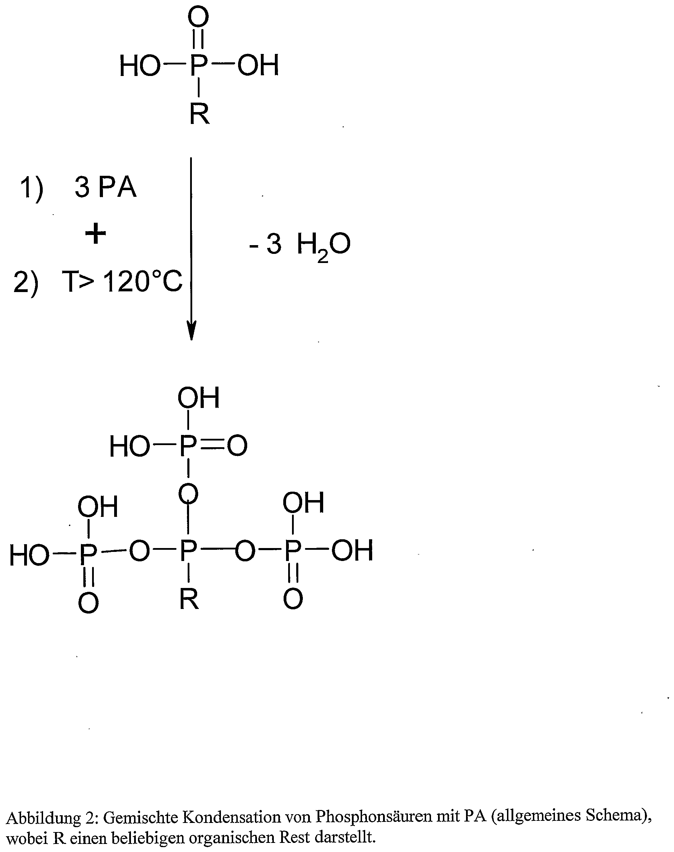

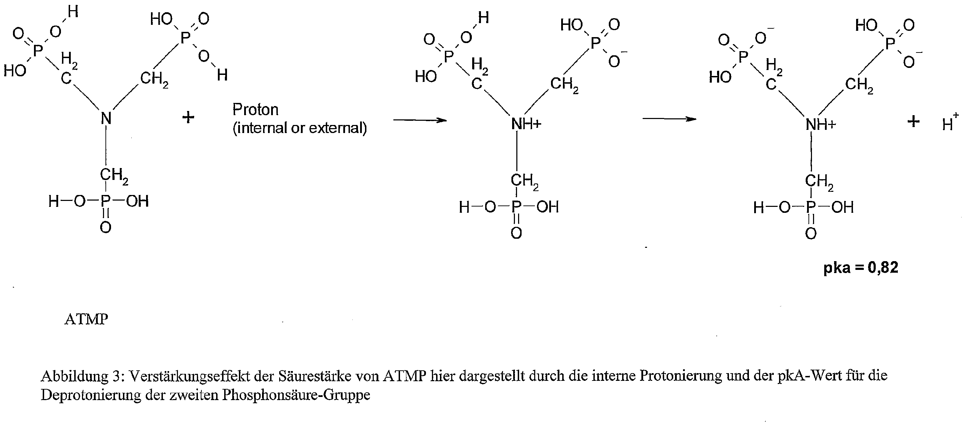

Es wurden zwei Mechanismen identifiziert, die wahrscheinlich dafür verantwortlich sind. Der erste Mechanismus Ist eine gemischte Kondensationsreaktion zwischen ATMP und PA (Abbildung 2) und der zweite Mechanismus ist ein Verstärkungseffekt durch einen protonierten Stickstoff im ATMP-Molekül (Abbildung 3). Durch den zweiten Effekt erhöht sich die Säurestärke der Protonen, die abgespalten werden. Die Brönstedtsäure für die Protonierung des Stickstoffs kann aus dem gleichen Molekül z.B. eine Phosphonsäure oder von einem anderen Molekül kommen. Beides ist möglich und es gibt unterschiedliche Anwendungen je nachdem welche Protonlerungsquelle man verwendet. Entscheidend für die Erhöhung der Säurestärke ist die Anordnung der Atome in der Bindungsfolge N-C-P. Ist C eine CH2-Gruppe ergibt sich folgende allgemeine Formel R2NCH2-PO3H2, wobei R unabhängig voneinander ein Alkyl-, Aryl-, Heteroarylrest, ein beliebig substituiertes C-Atom oder Wasserstoff ist. R kann beliebige funktionelle Gruppen tragen. Als Beispiele aber nicht einschränkend seien hier genannt Phosphonsäure, Sulfonsäure, Carbonsäure, Hydroxyl-, Nitro- oder Aminogruppen. Zur Erhöhung der Säurestärke oder der Stabilität kann R auch Fluor enthalten. Im Falle von ATMP sind beide Reste R identisch und R ist -CH2-PO3H2. Wird nun der Stickstoff protoniert erhält man R2NH<+>-CH2-PO3H2 und die Säurestärke des Phosphonsäurerestes steigt stark an. Das hat eine höhere Protonenleit-fähigkeit zur Folge. Befindet man sich unterhalb der Kondensations-temperatur dann ist die Protonenleitfähigkeit der dotierten Membran grösser als Im Vergleich zur Dotierung mit Phosphorsäure. Abbildung 3 zeigt die Protonierung von ATMP.

In den Beispielen wurde Polybenzimidazol vom Chemikalienfachhändler Aldrich verwendet. Zur Herstellung der Ausgangsmembran wurde eine 10%ige Lösung von PBI in DMAc verwendet. Die Lösung wurde auf einer Glasplatte ausgerakelt und das Lösungsmittel im Trockenschrank abgedampft. Man erhält eine Folie aus PBI.

### Beispiele:

### 1) Immobilisierung von ATMP in einer PBI-Membran:

Eine Folie aus PBI (IO×IOcm) mit einer Dicke von 60[mu] wird in einem Liter einer 50%(Gewicht) wässrige Lösung von ATMP eingelegt.Man lässt diese Lösung 24 Stunden bei 60-8O<0>C Im Ofen stehen. Danach wird die Folie herausgenommen und mit Zellstoff wird die Oberfläche trocken gewischt und zur Kontrolle gewogen.

Die Folie wird im Trockenschrank bei 80-11O<0>C getrocknet und erneut gewogen. Sie enthält nun 20% Gew. ATMP.

Die Aufnahme des ATMP hängt von der Behandlungszeit, der Konzentration und Temperatur der ATMP-Lösung ab. Es können durch mehrmaliges Behandeln und Trocknen Konzentrationen über 40% ATMP in PBI erzielt werden. Durch das Trocknen der Membran wird das Wasser entfernt.

Fügt man der wässrigen Lösung der Aminophosphonsäure noch ein aprotisches Lösungsmittel hinzu dann wird die Aufnahme des ATMP oder einer anderen Aminophosphonsäure noch weiter gesteigert. Das aprotische Lösungsmittel oder ein beliebiges Gemisch aus aprotischen Lösungsmitteln dient zur Quellung der PBI-Folie, Beispiele für ein solches Lösungsmittel ist NMP, DMAc, Sulfolan oder DMSO. Die Aufzählung ist nicht einschränkend. Bevorzugt Ist DMSO, da es keinen basischen Stickstoff enthält. Einzige Vorraussetzung für das Lösungsmittel ist, dass es die Quellung von PBI erhöht. Aceton ist z.B. weniger geeignet, da es den PBI-Film nur unwesentlich aufquillt. Eine Lösung von 100% NMP ist auch nicht geeignet, da sich Aminophosphonsäuren in konzentrierten aprotischen Lösungsmitteln nicht mehr lösen. Das gewählte Mischungsverhältnis zwischen Wasser und aprotischem Lösungsmittel hängt damit ab von dem gewollten Dotierungsgrad. Die Verwendung von zusätzlichen Lösungsmitteln zum Wasser wird besonders dann bevorzugt, wenn die Aminophosphonsäure ein höheres Molkulargewicht hat. Ein Beispiel ist Diethylen-triamino-penta-methylen-phosphonsäure (DTPMP). Aus einer wässrlgen Lösung nimmt PBI nur 2-4% von DTPMP aus. Verwendet man als Lösungmittel 50-70% NMP oder DMSO in Wasser, so kann man In einen PBI-Film mehr als 6% DTPMP einbringen.

### 2)Vergleichsbeispiel nach dem Stand der Technik

Immobilisierung von PA in einer PBI-Membran:
Eine Folie aus PBI (10x1 Ocm) mit einer Dicke von 60[mµ] wird in einem Liter einer 50 %(Gewicht) wässrige Lösung von PA eingelegt. Man lässt diese Lösung 24 Stunden bei 80[deg.]C im Ofen stehen.Die Folie wird wie in Beispiel 1 getrocknet.

### 3) Immobilisierung von PA und ATMP in einer PBI-Membran:

Eine Folie aus PBI (IO×IOcm) mit einer Dicke von 60[mu] wird in einem Liter einer wässrige Lösung bestehend aus ATMP und PA eingelegt. Die Lösung enthält 25%(Gew.) ATMP und 25%(Gew.) PA. Man lässt diese Lösung 24 Stunden bei 8O<0>C im Ofen stehen. Die Folie wird wie in Beispiel 1 getrocknet.

Die PA wird hier anstelle eines aprotischen Lösungsmittel verwendet. Diese Behandlung hat den Vorteil, dass gleichzeitig zur Aminophosphonsäure auch die Phosphorsäure (PA) In die Membran eingebracht wird.

### 4) Immobilisierung von PA und ATMP in einer PBI-Membran:

Eine Folie aus PBI (10x10cm) mit einer Dicke von 60[mµ] wird in einem Liter einer wässrige Lösung bestehend aus ATMP und PA eingelegt.

Die Lösung enthält 25%(Gew.) ATMP und 25%(Gew.) PA. Man lässt diese Lösung 24 Stunden bei 80[deg.]C im Ofen stehen.

Man Trocknet bei 130[deg.]C und gibt die Membran danach erneut in die Lösung aus ATMP und PA.

Durch die wiederholte Behandlung der Folie wird Wasser entfernt und der Dotierungsanteil mit ATMP und PA erhöht.

## Patentansprüche

1. Membran **dadurch gekennzeichnet, dass** sie Polybenzimidazol enthält und wenigstens eine Aminophosphonsäure, wobei diese die Folge der Atome N-C-P besitzt, wobei P für Phosphonsäure, N für Stickstoff und C für Kohlenstoff steht.

2. Membran nach Anspruch 1 **dadurch gekennzeichnet, dass** die Aminophosphonsäure die allgemeine Formel R2N-CH2-PO3H2 hat, wobei R unabhängig voneinander ein Alkyl-, Aryl-, Heteroarylrest, ein beliebig substituiertes C-Atom oder Wasserstoff ist, wobei R zusätzlich noch funktionelle Gruppen und Fluor enthalten kann.

3. Membran nach Anspruch 1 **dadurch gekennzeichnet, dass** sie eine beliebige Mischung von einer oder mehreren Aminophosponsäuren enthält.

4. Membran nach Anspruch 1 bis 3 **dadurch gekennzeichnet, dass** die verwendete Aminophosphonsäure Aminotrismethylenphosphonsäure (ATMP) oder Diethylen-triamino-penta-methylen-phosphonsäure (DTPMP) ist.

5. Membran nach Anspruch 1 bis 4 **dadurch gekennzeichnet, dass** sie zusätzlich noch Phosphorsäure enthält.

6. Membran nach Anspruch 1 bis 5 **dadurch gekennzeichnet, dass** zusätzlich wenigstens ein weiteres Polymer enthalten ist.

7. Membran nach Anspruch 6 **dadurch gekennzeichnet, dass** das weitere Polymer funktionalisiert ist.

8. Membran nach Anspruch 7 **dadurch gekennzeichnet, dass** das zusätzliche Polymer ein sulfoniertes Polymer ist.

9. Membran nach Anspruch 8 **dadurch gekennzeichnet, dass** der Anteil des sulfonierten Polymers bis zu 90% Gew. betragen kann.

10. Verfahren zur Herstellung der Membran nach Anspruch 9 **dadurch gekennzeichnet, dass** eine PBI-Membran, enthaltend das sulfonierte Polymer in der Salzform dotiert wird.

11. Verfahren zur Herstellung der Membran nach Anspruch 10 **dadurch gekennzeichnet, dass** sie nicht mit Phosphorsäure dotiert ist, sondern ausschließlich mit einer oder mehreren Aminophosphonsäuren.

12. Verfahren nach Anspruch 11 **dadurch gekennzeichnet, dass** der Anteil der Aminophosphonsäuren bis zu 80%Gew. betragen kann.

13. Verwendung der Membran nach den Ansprüchen 1 bis 9 und der Membranen erhältlich nach den Ansprüchen 10 bis 12 als Membran in Membranverfahren.

14. Verwendung der Membranen nach den Ansprüchen 1 bis 9 und der Membran erhältlich nach den Ansprüchen 10 bis 12 in der Membranbrennstoffzelle oder als Pervaporations-, Dialyse-, Umkehrosmose-, Nanofiltrations- und Ultrafiltrationsmembranen.

## Claims

1. Membrane **characterized in that** it contains polybenzimidazole and at least one aminophosphonic acid, the latter having the sequence of atoms N-C-P, where P stands for phosphonic acid, N for nitrogen and C for carbon.

2. Membrane according to claim 1, **characterized in that** the aminophosphonic acid has the general formula R₂N-CH₂-PO₃H₂, wherein R is independently of each other an alkyl radical, aryl radical, heteroaryl radical, an arbitrarily substituted C atom or hydrogen, wherein R may additionally contain functional groups and fluorine.

3. Membrane according to claim 1, **characterized in that** it contains any mixture of one or more aminophosphonic acids.

4. Membrane according to claim 1 to 3, **characterised in that** the aminophosphonic acid used is aminotrismethylenephosphonic acid (ATMP) or diethylene-triamino-pentamethylenephosphonic acid (DTPMP).

5. Membrane according to claim 1 to 4, **characterised in that** it additionally contains phosphoric acid.

6. Membrane according to claim 1 to 5, **characterised in that** at least one further polymer is additionally contained.

7. Membrane according to claim 6, **characterised in that** the further polymer is functionalised.

8. Membrane according to claim 7, **characterised in that** the additional polymer is a sulphonated polymer.

9. Membrane according to claim 8, **characterised in that** the proportion of sulphonated polymer can be up to 90% by weight.

10. Process for the preparation of the membrane according to claim 9, **characterized in that** a PBI membrane containing the sulphonated polymer in the salt form is doped.

11. Process for the preparation of the membrane according to claim 10, **characterized in that** it is not doped with phosphoric acid, but exclusively with one or more aminophosphonic acids.

12. Process according to claim 11, **characterised in that** the proportion of aminophosphonic acids can be up to 80% by weight.

13. Use of the membrane according to claims 1 to 9 and the membranes obtainable according to claims 10 to 12 as a membrane in membrane processes.

14. Use of the membranes according to claims 1 to 9 and the membrane obtainable according to claims 10 to 12 in the membrane fuel cell or as pervaporation, dialysis, reverse osmosis, nanofiltration and ultrafiltration membranes.

## Revendications

1. Membrane **caractérisée en ce qu'**elle contient du polybenzimidazole et au moins un acide aminophosphonique, celui-ci ayant la séquence d'atomes N-C-P, P étant l'acide phosphonique, N l'azote et C le carbone.

2. Membrane selon la revendication 1 **caractérisée en ce que** l'acide aminophosphonique a la formule générale R₂N-CH₂-PO₃H₂, dans laquelle les R sont indépendamment les uns des autres un radical alkyle, radical aryle, radical hétéroaryle, un atome de C substitué de manière quelconque ou un hydrogène, R pouvant en outre contenir encore des groupes fonctionnels et du fluor.

3. Membrane selon la revendication 1, **caractérisée en ce qu'**elle contient un mélange quelconque d'un ou plusieurs acides aminophosphoniques.

4. Membrane selon les revendications 1 à 3, **caractérisée en ce que** l'acide aminophosphonique utilisé est l'acide aminotrisméthylènephosphonique (ATMP) ou l'acide diéthylène-triamino-penta-méthylène-phosphonique (DTPMP).

5. Membrane selon les revendications 1 à 4, **caractérisée en ce qu'**elle contient en outre de l'acide phosphorique.

6. Membrane selon les revendications 1 à 5, **caractérisée en ce qu'**elle contient en outre au moins un autre polymère.

7. Membrane selon la revendication 6, **caractérisée en ce que** l'autre polymère est fonctionnalisé.

8. Membrane selon la revendication 7, **caractérisée en ce que** le polymère supplémentaire est un polymère sulfoné.

9. Membrane selon la revendication 8, **caractérisée en ce que** la proportion de polymère sulfoné peut aller jusqu'à 90% en poids.

10. Procédé de fabrication de la membrane selon la revendication 9, **caractérisé en ce qu'**une membrane PBI contenant le polymère sulfoné sous forme de sel est dopée.

11. Procédé de fabrication de la membrane selon la revendication 10, **caractérisé en ce qu'**elle n'est pas dopée avec de l'acide phosphorique, mais exclusivement avec un ou plusieurs acides aminophosphoniques.

12. Procédé selon la revendication 11, **caractérisé en ce que** la proportion d'acides aminophosphoniques peut aller jusqu'à 80% en poids.

13. Utilisation de la membrane selon les revendications 1 à 9 et des membranes pouvant être obtenues selon les revendications 10 à 12 comme membrane dans des procédés à membrane.

14. Utilisation des membranes selon les revendications 1 à 9 et de la membrane pouvant être obtenue selon les revendications 10 à 12 dans la pile à combustible à membrane ou comme membranes de pervaporation, de dialyse, d'osmose inverse, de nanofiltration et d'ultrafiltration.
